# EUROPÄISCHE PATENTSCHRIFT

(11) **EP 3 156 527 B1**
(45) Veröffentlichungstag und Bekanntmachung des Hinweises auf die Patenterteilung: **25.07.2018**
(21) Anmeldenummer: 16193356.9
(22) Anmeldetag: 11.10.2016
(51) Int. Cl.: D01H 4/14, F16C 32/04

(54) **OFFENEND-ROTORSPINNVORRICHTUNG MIT EINEM SPINNROTOR, DER MIT SEINEM ROTORSCHAFT IM ZWICKEL EINER STÜTZSCHEIBENLAGERUNG GELAGERT IST**
OPEN END ROTOR SPINNING DEVICE WITH A SPINNING ROTOR WHERE THE ROTOR SHAFT IS SUPPORTED IN THE GUSSET OF A SUPPORTING DISK BEARING
DISPOSITIF DE FILATURE À ROTOR À BOUT LIBRE AVEC UN ROTOR FILEUR, STOCKÉ AVEC SA TIGE DE ROTOR DANS LE COIN D'UN PALIER À DISQUE D'APPUI

(30) Priorität: 16.10.2015 DE 102015013484
(43) Veröffentlichungstag der Anmeldung: 19.04.2017
(73) Patentinhaber: Saurer Germany GmbH & Co. KG, 42897 Remscheid (DE)
(72) Erfinder: Winzen, Lothar, 52134 Herzogenrath (DE)
(74) Vertreter: Morgenthum-Neurode, Mirko

(56) Entgegenhaltungen:
- EP-A1- 2 187 075
- DE-A1- 4 022 562
- DE-A1- 19 642 471

## Beschreibung

Die Erfindung betrifft eine Offenend-Rotorspinnvorrichtung mit einem Spinnrotor, der mit seinem Rotorschaft im Zwickel einer Stützscheibenlagerung gelagert und mittels einer Magnetlagereinrichtung axial positioniert ist, sowie einer Antriebs- und Lagereinrichtung zur rotatorischen Beaufschlagung wenigstens eines der Stützscheibenpaare der Stützscheibenlagerung.

Moderne Offenend-Rotorspinnmaschinen müssen heutzutage eine Vielzahl von Anforderungen erfüllen, die bei der Konstruktion derartiger Textilmaschinen unbedingt berücksichtigt werden sollten. Derartige Offenend-Rotorspinnmaschinen sollten beispielsweise nicht nur in der Lage sein, bei Bedarf jederzeit qualitativ hochwertige Garne zu fertigen, sondern derartige Textilmaschinen sollten auch stets möglichst wirtschaftlich arbeiten. Das heißt, solche Textilmaschinen sollten sich durch eine hohe Produktionsleistung auszeichnen, wobei für die Produktionsleistung von Offenend-Rotorspinnmaschinen in erster Linie die Drehzahl der Spinnrotoren der Offenend-Rotorspinnvorrichtungen ausschlaggebend ist.

Aus diesem Grunde wurden im Laufe der Jahre zahlreiche, zum Teil recht unterschiedliche Antriebs- und Lagervarianten für Spinnrotoren entwickelt, die es ermöglichen, mit Rotordrehzahlen von deutlich über 100.000 U/min zu arbeiten.

Sowohl in der Praxis als auch in der Patentliteratur sind beispielsweise seit langem Offenend-Rotorspinnmaschinen bekannt, deren Offenend-Rotorspinnvorrichtungen jeweils mit einem Spinnrotor ausgerüstet sind, der mit seinem Rotorschaft im Zwickel einer Stützscheibenlagerung gelagert ist. Der Spinnrotor wird dabei in der Regel durch einen von oben auf dem Rotorschaft aufliegenden, maschinenlangen Tangentialriemen angetrieben.

Das heißt, bei solchen Offenend-Rotorspinnvorrichtungen liegt ein umlaufender, durch einen maschinenendseitig angeordneten Antrieb beaufschlagter Tangentialriemen, vorzugsweise durch eine Andruckrolle beaufschlagt, mittig zwischen den vorderen und hinteren Stützscheiben auf dem Rotorschaft des Spinnrotors auf und nimmt diesen reibschlüssig mit.

Bei derartigen Offenend-Rotorspinnvorrichtungen sind außerdem die Achsen der Stützscheibenpaare etwas geschränkt angeordnet, so dass eine auf das Ende des Rotorschaftes gerichtete Kraftkomponente entsteht, die durch ein so genanntes Axiallager kompensiert werden muss. Solche Offenend-Spinnvorrichtungen verfügen beispielsweise über ein hinter dem Rotorschaft angeordnetes mechanisches Axiallager, an dem sich der Rotorschaft während des Spinnbetriebes abstützt, oder, wie beispielsweise in der DE 40 22 562 A1 beschrieben, über eine mit dem Rotorschaft korrespondierende Magnetlagereinrichtung.

Die vorstehend beschriebene, an sich bewährte Ausführungsform einer Offenend-Spinnvorrichtung, bei der der Antrieb der Spinnrotoren einer Maschinenseite durch einen gemeinsamen, maschinenlagen Tangentialriemen erfolgt, weist allerdings verschiedene Nachteile auf. Bei einer solchen Ausführungsform kommt es beispielsweise zu einer nicht unerheblichen Belastung der Stützscheibenlagerungen der Offenend-Rotorspinnvorrichtungen, da der Tangentialriemen durch eine Andrückrolle jeweils relativ kräftig von oben auf den Rotorschaft gedrückt wird.

In der Vergangenheit sind deshalb bereits verschiedene Versuche unternommen worden, diese relativ hohe Belastung der Stützscheibenlagerungen zu umgehen bzw. zu minimieren.

In der DE 42 19 278 A1 sind beispielsweise zwei Ausführungsformen von Offenend-Rotorspinnvorrichtungen beschrieben, mit denen unter anderem eine Entlastung der Stützscheibenlagerungen realisiert werden soll.
In einer ersten Ausführungsform ist vorgesehen, dass der Anpressdruck des maschinenlangen Tangentialriemens an den Rotorschaft des Spinnrotors dadurch optimiert werden soll, dass die Andrückrolle mittels einer Antriebseinrichtung definiert, das heißt, mit gleichmäßigem, relativ geringen Anpressdruck an den Tangentialriemen anstellbar ist.
Bei einer zweiten Ausführungsform wird der Einsatz einer drehzahlregelbaren Antriebsrolle vorgeschlagen. Das heißt, eine einzelmotorisch beaufschlagbare Antriebsrolle wird zwischen den Stützscheiben der Offenend-Spinnvorrichtung von oben auf den Rotorschaft des Spinnrotors aufgesetzt und antriebsmäßig so geregelt, dass die Reibungsverhältnisse zwischen Antriebsrolle und Rotorschaft auch bei geringer Andruckkraft möglichst optimal sind.

Auch die DE 37 34 545 A1 beschreibt Offenend-Rotorspinnvorrichtungen, bei denen die in einer Stützscheibenlagerung gelagerten Rotorschäfte der Spinnrotoren jeweils durch eine von oben auf den Rotorschaft wirkende Treibrolle beaufschlagt werden, wobei die Treibrolle jeweils durch einen Elektromotor angetrieben wird.
Die Treibrollen müssen dabei allerdings, um die für eine ordnungsgemäße Mitnahme der Rotorschäfte erforderliche Reibkraft zu gewährleisten, mit einer relativ hohen Andruckkraft an die Rotorschäfte angestellt werden, mit der Folge, dass auch bei diesen bekannten Offenend-Rotorspinnvorrichtungen die Stützscheibenlagerungen nicht unerheblich belastet werden.

Einzelmotorische Antriebe für Spinnrotoren von Offenend-Rotorspinnvorrichtungen sind auch durch die DE-OS 22 03 586, die DE 196 42 471 A1, die DE 34 01 315 A1 oder die EP 2 233 617 B1 bekannt.

Die DE-OS 22 03 586 beschreibt eine Offenend-Rotorspinnvorrichtung mit einem Spinnrotor, der mit seinem Rotorschaft im Zwickel einer Stützscheibenlagerung gelagert und über ein rotorschaftendseitig angeordnetes, mechanisches Axiallager fixiert ist.
Der Rotorschaft verfügt außerdem über einen elektrischen Einzelantrieb, der entweder im Bereich zwischen den Stützscheiben oder hinter den Stützscheiben angeordnet ist. Der Einzelmotor weist dabei einen außen am Rotorschaft festgelegten Läufer auf, der in einem Stator rotiert, der an einem Lagerkörper der Stützscheibenlagerung bzw. an einem Spinnboxgehäuse befestigt ist.

Eine vergleichbare Offenend-Rotorspinnvorrichtung ist auch in der DE 196 42 471 A1 beschrieben. Auch bei dieser bekannten Offenend-Spinnvorrichtung ist der Spinnrotor mit seinem Rotorschaft im Zwickel einer Stützscheibenlagerung gelagert und weist im Bereich hinter den Stützscheiben einen elektromotorischen Einzelantrieb auf.
Der Rotorschaft ist dabei als Hohlwelle ausgebildet, in die der Läufer eines elektromotorischen Einzelantriebes integriert ist, dessen Stator am Spinnboxgehäuse festgelegt ist. Bei dieser bekannten Offenend-Rotorspinnvorrichtung ist außerdem ein rotorschaftendseitig angeordnetes Axiallager vorgesehen, das als Permanentmagnetlager ausgebildet ist.

Auch durch die DE 34 01 315 A1 ist eine Offenend-Rotorspinnvorrichtung bekannt, bei der der Spinnrotor, wie üblich, mit seinem Rotorschaft im Zwickel zweier Stützscheibenpaare gelagert und mittels eines Einzelantriebes rotatorisch beaufschlagbar ist. Unterhalb der Stützscheibenlagerung ist dabei ein Antriebsmotor installiert, dessen Motorwelle mit einem Antriebswirtel für einen Tangentialriemen ausgestattet ist.
Der Rotorschaft des Spinnrotors weist in seinem mittleren Bereich ebenfalls einen wirtelartigen Ansatz für den Tangentialriemen auf, so dass der Einzelantrieb über den Tangentialriemen den Spinnrotor antreiben kann. Die Achsen der Stützscheibenpaare sind, wie ebenfalls bekannt, etwas geschränkt, und zur axialen Abstützung des Rotorschaftes ist ein hinter dem Rotorschaft ein mechanisches, ölgeschmiertes Axiallager vorgesehen.

Schließlich sind in der EP 2 233 617 B1 Offenend-Rotorspinnvorrichtungen beschrieben, bei denen der Antrieb des Rotorschaftes des Spinnrotors durch wenigstens ein antreibbares Stützscheibenpaar erfolgt.

Auch bei diesen bekannten Offenend-Rotorspinnvorrichtungen ist der Spinnrotor mit seinem Rotorschaft im Zwickel zweier Stützscheibenpaare gelagert und axial durch ein mechanisches Axiallager gesichert. Bei diesen Offenend-Rotorspinnvorrichtungen ist außerdem wenigstens eines der Stützscheibenpaare mit einem elektromotorischen Antrieb, vorzugsweise einem frequenzgesteuerten Synchronmotor, ausgestattet. Das durch den elektromotorischen Einzelantrieb beaufschlagte Stützscheibenpaar nimmt während des Spinnbetriebes den Rotorschaft, der durch eine Andrückrolle im Zwickel der Stützscheibenpaare gehalten wird, reibschlüssig mit und rotiert den Spinnrotor mit Betriebsdrehzahl.

Nachteilig bei den vorstehend beschriebenen Offenend-Rotorspinnvorrichtungen mit Spinnrotoren, die mit ihrem Rotorschaft im Zwickel einer Stützscheibenlagerungen gelagert und über rotorendseitig angeordnete Axiallager abgestützt sind, ist allerdings der relativ große Platzbedarf dieser bekannten Einrichtungen.

Ausgehend vom vorgenannten Stand der Technik liegt der Erfindung die Aufgabe zugrunde, Offenend-Rotorspinnvorrichtungen dahingehend zu verbessern, dass die vorstehend beschriebenen Nachteile weitestgehend vermieden werden.

Diese Aufgabe wird erfindungsgemäß dadurch gelöst, dass die Magnetlagereinrichtung zur axialen Fixierung des Rotorschaftes im Bereich des Zwickels der Stützscheibenlagerung zwischen den vorderen und den hinteren Stützscheiben angeordnet ist.

Vorteilhafte Ausgestaltungen der Erfindung sind Gegenstand der Unteransprüche.

Die erfindungsgemäße Ausbildung von Offenend-Rotorspinnvorrichtungen weist insbesondere den Vorteil auf, dass solche Offenend-Rotorspinnvorrichtungen, obwohl sie mit einer separaten Antriebseinrichtung, einer Stützscheibenlagerung und einer Magnetlagereinrichtung zur sicheren Positionierung des Spinnrotors ausgestattet sind, sehr kompakt bauen.
Das heißt, derartig ausgebildete Offenend-Rotorspinnvorrichtungen benötigen im Bereich der Arbeitsstellen der Offenend-Rotorspinnmaschine relativ wenig Einbauraum, was sich sowohl beim Zusammenbau und bei der Demontage solcher Offenend-Rotorspinnvorrichtungen sehr positiv auswirkt.
Durch die Anordnung einer Magnetlagereinrichtung im Bereich zwischen den vorderen und hinteren Stützscheiben kann außerdem die Länge des Rotorschaftes insgesamt relativ kurz gehalten werden, was sich während des Betriebes auf das Schwingungsverhalten der Offenend-Spinneinrichtung und damit auf das nutzbare Drehzahlniveau der Einrichtung äußerst positiv auswirkt.

Vorzugsweise ist die Magnetlagereinrichtung so ausgebildet, dass der Rotorschaft durch die Magnetlagereinrichtung mit einer in Richtung der Stützscheiben wirkenden Anpresskraft beaufschlagt ist. Damit führt die vorgeschlagene Anordnung der Magnetlagereinrichtung im Bereich zwischen den vorderen und hinteren Stützscheiben nicht nur zu einer kompakten Konstruktion, die während des Spinnbetriebes eine sichere Positionierung des Rotorschaftes im Lagerzwickel der Stützscheibenlagerung gewährleistet, sondern eine solche Anordnung macht auch den bislang üblichen Einsatz einer zusätzlichen, auf den Rotorschaft wirkenden Andrückrolle überflüssig, was sich bei der Herstellung kostengünstig bemerkbar macht.
In vorteilhafter Ausführungsform ist vorgesehen, dass der Durchmesser der Stützscheiben weniger als das Doppelte des Durchmessers des Spinnrotors beträgt.
Auf diese Weise kann der benötigte Einbauraum minimiert werden, wobei durch eine entsprechende Anpassung des Durchmessers des Rotorschaftes sichergestellt wird, dass die Drehzahlen der verschiedenen Bauteile der Stützscheibenlagerung in vertretbaren, unkritischen Grenzen bleiben. Das heißt, die relativ kleinen Stützscheiben der erfindungsgemäßen Stützscheibenlagerung rotieren auch bei Spinnrotordrehzahlen von 150 000 U/min lediglich in einem Drehzahlbereich, wie er von den bislang üblichen, wesentlich größer bauenden Stützscheibenlagerungen bekannt ist.
Der Antrieb des Spinnrotors kann dabei mittels unterschiedlicher Antriebseinrichtungen erfolgen.
Es ist beispielsweise vorstellbar, dass die beiden Stützscheibenpaare oder wenigstens eines der Stützscheibenpaare über einen Tangentialriemen an einen elektromotorischen Einzelantrieb angeschlossen sind/ist.
In einer anderen Ausführungsform ist vorgesehen, dass wenigstens eines der Stützscheibenpaare mit einem elektromotorischen Einzelantrieb ausgestattet ist.
Welche der beschriebenen Antriebseinrichtungen letztendlich zum Einsatz kommt, ist für die Erfindung nicht wesentlich, da alle Antriebsformen insgesamt recht vorteilhaft sind.

In vorteilhafter Ausführungsform ist außerdem vorgesehen, dass die Stützscheibenpaare jeweils über eine Lagerwelle verfügen, die in einer Wälzlagereinrichtung abgestützt ist, wobei die Wälzlagereinrichtung in paralleler Ausrichtung auf der dem Spinnrotor gegenüberliegenden Seite der Stützscheibenpaare angeordnet ist.
Eine solche Anordnung der Wälzlagereinrichtungen hat nicht nur den Vorteil, dass die Wälzlagereinrichtungen äußerst platzsparend positioniert sind, sondern der Einbau von Stützscheibenpaaren, deren Lagerachsen parallel verlaufen, wirkt sich auch hinsichtlich des Verschleißes der Stützscheibenlaufringe sehr positiv aus.

Vorzugsweise weist außerdem jede der Lagerwellen der Stützscheibenpaare endseitig ein wirtelartiges Bauelement auf, an dem ein im Betriebszustand umlaufender Tangentialriemen anliegt, der seinerseits an einen Antriebswirtel eines arbeitsstelleneigenen, elektromotorischen Antriebes angeschlossen ist.
Mit einer solchen kompakten Ausführungsform ist auf einfache Weise eine unkomplizierte, zuverlässige Übertragung des Antriebsmomentes des Einzelantriebes auf die Stützscheibenpaare der Offenend-Rotorspinnvorrichtung und über diese eine reibschlüssige Weitergabe des Antriebsmomentes an den Rotorschaft des Spinnrotors gewährleistet.
Da der Durchmesser der Stützscheiben, wie üblich, ein Mehrfaches des Durchmessers des Rotorschaftes beträgt, kommt es dabei außerdem zu einer Übersetzung der Drehzahl der Stützscheiben, mit dem Ergebnis, dass der Spinnrotor mit bis zu 150 000 U/min umläuft.

In vorteilhafter Ausführungsform ist des Weiteren vorgesehen, dass der elektromotorische Einzelantrieb in einem Bereich unterhalb der Wälzlagereinrichtungen der Stützscheibenpaare angeordnet ist. Eine solche Anordnung hat, wie vorstehend bereits im Zusammenhang mit der Wälzlagereinrichtung erläutert, insbesondere den Vorteil, dass der Einzelantrieb optimal, das heißt, äußerst platzsparend positioniert ist.

In einer weiteren Ausführungsform ist vorgesehen, dass die Magnetlagereinrichtung eine in einer Lagerbuchse angeordnete, stationäre Magnetlagerkomponente und eine mit dem Rotorschaft umlaufende Magnetlagerkomponente aufweist, wobei die stationäre Magnetlagerkomponente wenigstens ein Permanentmagnetelement sowie dazu seitlich angeordnete Polelemente umfasst und die bewegliche Magnetlagerkomponente durch am Rotorschaft angeordnete, mit den Polelementen korrespondierende ferromagnetische Ringansätze gebildet wird.

Die Ausbildung einer stationären Magnetlagereinrichtung mit Polelementen, die ein Permanentmagnetelement einschließen, führt in Verbindung mit einer umlaufenden Magnetlagereinrichtung, die aus zwei ferromagnetischen Ringansätzen im Bereich des Rotorschaftes besteht, die bezüglich ihrer Abmessungen und Positionierung auf die Polelemente abgestimmt sind, zu einem auch bei hohen Drehzahlen kompakten, ausreichend steifen sowie verschleiß- und wartungsfreien Axiallager.
Wie vorstehend bereits angedeutet, entspricht dabei die Breite eines Polelementes jeweils der Breite des gegenüberliegenden ferromagnetischen Ringansatzes, wobei die Breite der Bauteile vorzugsweise so weit minimiert ist, bis aufgrund der Bündelung der magnetischen Kraftlinien eine magnetische Sättigung des ferromagnetischen Werkstoffes dieser Bauteile auftritt.

Ein weiterer Vorteil der erfindungsgemäßen Magnetlagereinrichtung liegt darin, dass der Spinnrotor, der mit seinem Rotorschaft im Lagerzwickel einer Stützscheibenlagerung abgestützt ist, leicht auswechselbar bleibt. Der Spinnrotor kann folglich im Bedarfsfall nach dem Öffnen des Rotorgehäuses problemlos nach vorne ausgebaut und problemlos von vorne wieder eingebaut werden.

In vorteilhafter Ausführungsform ist des Weiteren vorgesehen, dass die Polelemente als Polscheiben ausgebildet sind, wobei jede Polscheibe einen lichten Querschnitt aufweist, der im Bereich einer im Einbauzustand der Polscheiben vertikal angeordneten Achse eine größere Ausdehnung aufweist, als im Bereich einer zur vertikalen Achse orthogonal angeordneten Achse.

Eine solche Ausbildung führt gegenüber den bislang bekannten magnetischen Axiallagern zu einer Änderung der Stärke der radialen magnetischen Kraftkomponente des Axiallagers, was den Ein- und Ausbau des Rotorschaftes erleichtert, ohne dass die Steifigkeit des Axiallagers erheblich geschwächt wird.

Das heißt, durch einen relativ breiten Ringspalt im oberen Bereich der vertikalen Symmetrieachse kommt es zu einer deutlichen Abschwächung der Stärke der nach oben gerichteten radialen Kraftkomponente des magnetischen Axiallagers, wobei die Axialsteifigkeit des Lagers aufgrund der nach wie vor relativ geringen Ringspaltbreite in den restlichen Bereichen nahezu unverändert bleibt.

Weitere Einzelheiten der Erfindung sind einem nachfolgend anhand der Zeichnungen dargestellten Ausführungsbeispiele entnehmbar.

Es zeigt:
- Fig. 1: in Seitenansicht schematisch eine Offenend-Rotorspinnvorrichtung mit einer erfindungsgemäßen Lager- und Antriebseinrichtung für einen Offenend-Spinnrotor,
- Fig. 2: eine perspektivische Ansicht einer vorteilhaften Ausführungsform der Lager- und Antriebseinrichtung eines Offenend-Spinnrotors,
- Fig. 3: eine Draufsicht auf eine im Bereich des Zwickels einer Stützscheibenlagerung zwischen den vorderen und hinteren Stützscheiben angeordneten Magnetlagereinrichtung zur axialen Fixierung des Spinnrotors,
- Fig. 4: eine Vorderansicht auf ein als Polscheibe ausgebildetes Polelement einer Magnetlagereinrichtung,
- Fig. 5: eine Vorderansicht einer weiteren Ausführungsform eines Polelementes einer Magnetlagereinrichtung,
- Fig. 6: eine Seitenansicht der Magnetlagereinrichtung gemäß Fig.5..

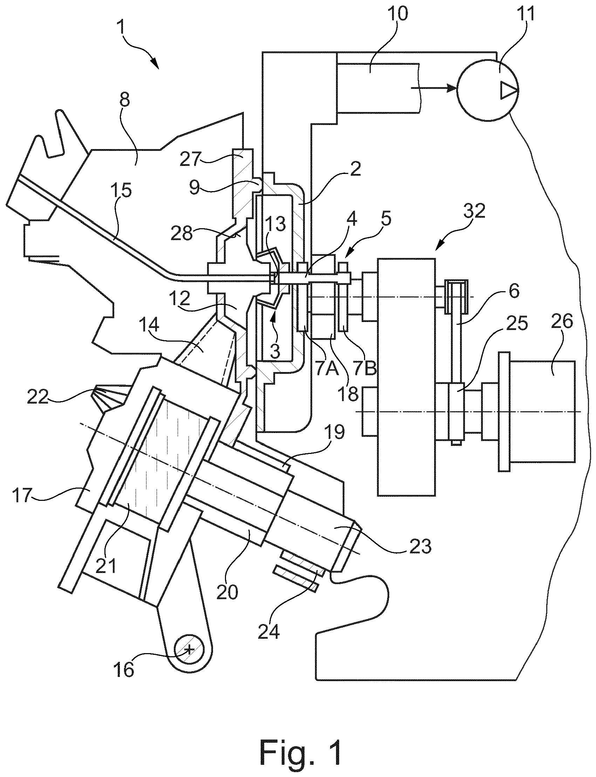

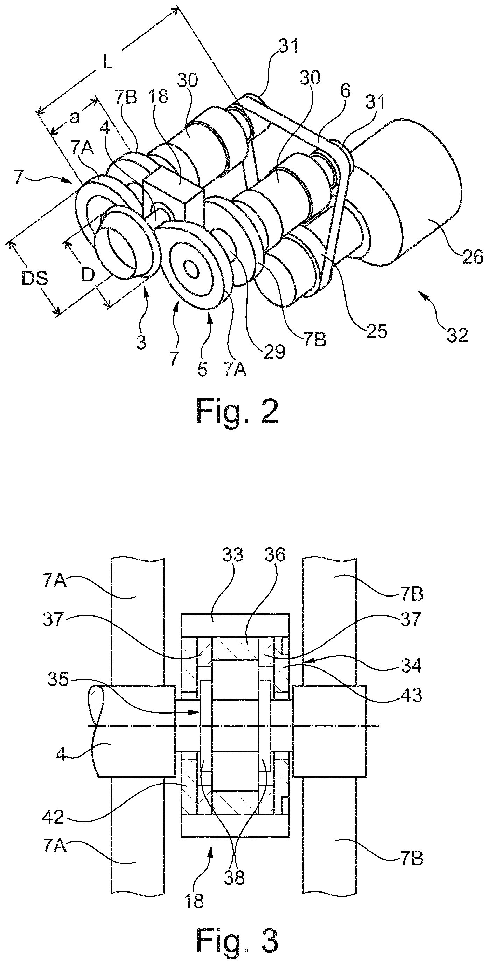

Die im Ausführungsbeispiel gemäß Figur 1 in Seitenansicht dargestellte Offenend-Spinnvorrichtung trägt insgesamt die Bezugszahl1. Derartige Offenend-Spinnvorrichtungen 1 verfügen, wie bekannt, jeweils über ein Rotorgehäuse 2, in dem während des Spinnbetriebes die Spinntasse eines Spinnrotors 3 mit hoher Drehzahl umläuft. Der Spinnrotor 3 ist dabei in einer Antriebs- und Lagereinrichtung 32 abgestützt. Das heißt, der Spinnrotor 3 ist mit seinem Rotorschaft 4 im Lagerzwickel einer Stützscheibenlagerung 5 abgestützt, deren Stützscheibenpaare 7, wie nachfolgend anhand der Fig.2 näher erläutert werden wird, jeweils zum Beispiel mittels eines Tangentialriemens 6, der an den Antriebswirtel 25 eines Einzelantriebes 26 angeschlossen ist, beaufschlagt werden.
Die axiale Positionierung des Rotorschaftes 4 erfolgt über eine Magnetlagereinrichtung 18, die im Bereich des Zwickels der Stützscheibenlagerung 5 zwischen den vorderen 7A und den hinteren 7B Stützscheiben der Stützscheibenpaare 7 angeordnet ist und die später anhand der Figuren 3 - 6 näher erläutert werden wird.

Wie üblich, ist das nach vorne hin an sich offene Rotorgehäuse 2 während des Betriebes durch ein schwenkbar gelagertes Deckelelement 8, das zum Beispiel eine Kanalplatte 27 aufweist, in die eine Dichtung 9 eingelassen ist, verschlossen.
Das Rotorgehäuse 2 ist außerdem über eine entsprechende Absaugleitung 10 an eine Unterdruckquelle 11 angeschlossen, die den im Rotorgehäuse 2 während des Spinnbetriebes notwendigen Spinnunterdruck erzeugt.

In einer Aufnahme 28 der Kanalplatte 27 ist ein Kanalplattenadapter 12 angeordnet, der eine Fadenabzugsdüse 13 sowie den Mündungsbereich eines Faserleitkanales 14 aufweist, wobei sich an die Fadenabzugsdüse 13 ein Fadenabzugsröhrchen 15 anschließt.

Am Deckelelement 8, das um eine Schwenkachse 16 begrenzt drehbar gelagert ist, ist außerdem, wie ebenfalls bekannt, ein Auflösewalzengehäuse 17 festgelegt.
Das Deckelelement 8 weist des Weiteren rückseitig Lagerkonsolen 19, 20 zur Lagerung einer Auflösewalze 21, beziehungsweise eines Faserbandeinzugszylinders 22 auf.
Die Auflösewalze 21 wird in vorteilhafter Ausführungsform im Bereich ihres Wirtels 23 durch einen umlaufenden, maschinenlangen Tangentialriemen 24 angetrieben, während der (nicht näher dargestellte) Antrieb des Faserbandeinzugszylinders 22 entweder über eine Schneckengetriebeanordnung, die auf eine maschinenlange Antriebswelle geschaltet ist oder über einen Einzelantrieb, der vorzugsweise als Schrittmotor ausgebildet ist, erfolgt.

Die in Fig.2 in perspektivischer Ansicht dargestellte Ausführungsform einer Antriebs- und Lagereinrichtung 32 weist im Wesentlichen eine Stützscheibenlagerung 5, eine Magnetlagereinrichtung 18 sowie eine über einen Einzelantrieb 26 verfügende Antriebseinrichtung 26 zum Rotieren der beiden Stützscheibenpaare 7 auf.
Die Stützscheiben 7A und 7B der Stützscheibenpaare 7 der Stützscheibenlagerung 5 sind dabei jeweils drehfest auf einer Lagerwelle 29 festgelegt, die ihrerseits jeweils in einer Wälzlagereinrichtung 30 rotierbar gelagert ist. Die Lagerwellen 29 sind außerdem endseitig jeweils mit einem wirtelartigen Bauelement 31 ausgestattet, das durch einen Tangentialriemen 6 beaufschlagt wird, der durch einen Antriebswirtel 25 der als Einzelantrieb ausgebildeten Antriebseinrichtung 26 angetrieben wird.

Im Lagerzwickel der Stützscheibenlagerung 5 ist zwischen den vorderen 7A und den hinteren 7B Stützscheiben der Stützscheibenpaare 7 eine Magnetlagereinrichtung 18 angeordnet, die vom Rotorschaft 4 eines Spinnrotors 3 durchfasst wird. Die Magnetlagereinrichtung 18, deren genauer Aufbau anschließend anhand der Figuren 3 - 6 näher erläutert werden wird, gewährleistet während des Spinnbetriebes sowohl eine sichere axiale Fixierung, als auch eine kippsichere Auflage des Rotorschaftes 4 des Spinnrotors 3 auf der Stützscheibenlagerung 5. Das heißt, der Rotorschaft 4 wird mit einer Anpresskraft F beaufschlagt, die in Richtung der Stützscheibenlagerung 5 wirkt.

Wie aus Fig.2 weiter ersichtlich, weisen die Stützscheiben 7A und 7B der Stützscheibenpaare 7 einen relativ kleinen Durchmesser DS auf. Das heißt, in der Praxis liegt der Durchmesser DS der Stützscheiben 7A, 7B oft nur geringfügig über dem Durchmesser D des Spinnrotors 3. Da auch die zugehörigen Wälzlagereinrichtungen 30 sowie der Einzelantrieb 26 äußerst kompakt gestaltet und optimal positioniert sind, bildet die Antriebs- und Lagereinrichtung 32 insgesamt eine relativ kleine Baueinheit, die trotz der beengten Platzverhältnisse, die bekanntlich im Bereich der Arbeitsstellen von Offenend-Rotorspinnmaschinen gegeben sind, vorteilhaft bei Offenend-Rotorspinnvorrichtungen eingesetzt werden kann. Die Antriebs- und Lagereinrichtung 32 sorgt insgesamt für eine Verbesserung der bislang bekannten Stützscheibenlagerungen.

In Fig.3 ist eine erste Ausführungsform einer zwischen den vorderen Stützscheiben 7A und den hinteren Stützscheiben 7B angeordnete Magnetlagereinrichtung 18 in Draufsicht sowie teilweise im Schnitt dargestellt.

Wie ersichtlich, verfügt die Magnetlagereinrichtung 18 über eine stationäre Magnetlagerkomponente 34, die in einem Lagergehäuse 33 angeordnet ist, sowie über eine dynamische Magnetlagerkomponente 35, die durch ferromagnetische Ringansätze 38 am Rotorschaft 4 des Spinnrotors 3 gebildet wird. Das heißt, durch Einstiche in den Rotorschaft 4 werden ferromagnetische Ringansätze 38 gebildet.
Die stationäre Magnetlagerkomponente 34 weist ein vorzugsweise durch axial polarisierte Seltenerdmagneten gebildetes Permanentmagnetelement 36, im Ausführungsbeispiel einen Permanentmagnetring, auf, an das sich beidseitig jeweils ein Polelement 37, das im vorliegenden Ausführungsbeispiel als Polscheibe ausgebildet ist, anschließt. Die Polscheiben 37, die innerhalb des Lagergehäuses 33, jeweils durch einen Zentrieransatz 41, der mit einer Führungsnut im Lagergehäuse 33 korrespondiert, winkelgenau ausgerichtet sind, bestehen aus einem ferromagnetischen Material, vorzugsweise aus Stahl.
Die Polscheiben 37 und der Permanentmagnetring 36 sind innerhalb des Lagergehäuses 33 außerdem durch ringartig ausgebildete Sicherungsmittel 42, 43 festgelegt, die zum Beispiel aus einer Kupferlegierung, beispielsweise Messing, oder einem glasfaserverstärkten Kunststoff gefertigt ist.
Die ferromagnetischen Ringansätze 38 der dynamischen Magnetlagerkomponente 35 weisen vorzugsweise die gleiche Breite auf, wie die Polscheiben 37 der stationären Magnetlagerkomponente 34.
Die stationäre Magnetlagerkomponente 34 sorgt in Verbindung mit der stationären Magnetlagerkomponente 34 während des Spinnbetriebes dafür, dass der Rotorschaft 4 des Spinnrotors 3 einerseits auf der Stützscheibenlagerung 5 axial fixiert ist und anderseits mit einer Anpresskraft F, die in Richtung der Stützscheiben 7A,7B weist, beaufschlagt wird.

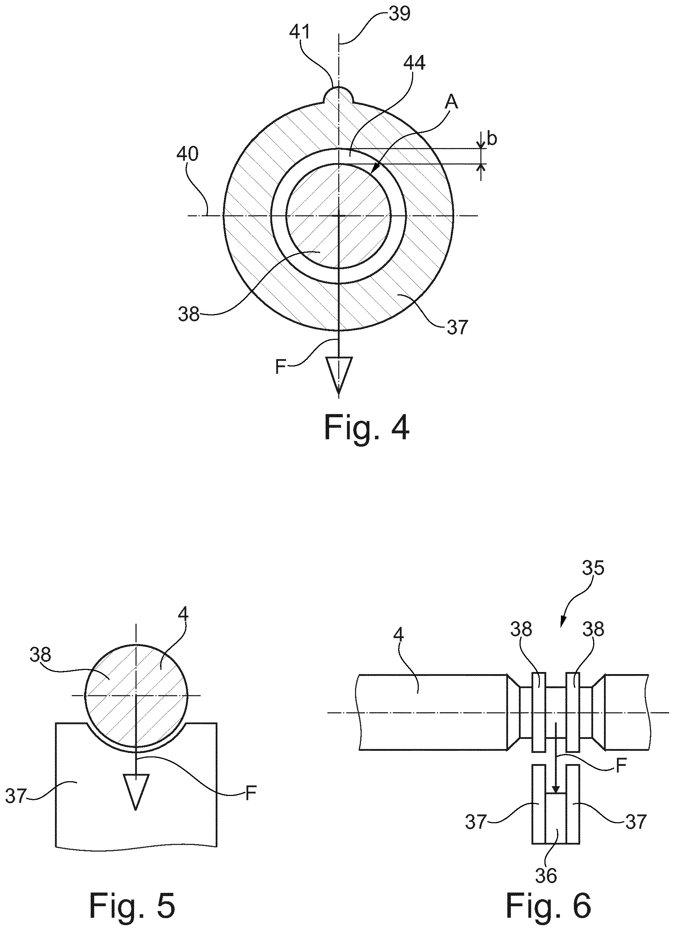

Die Fig.4 zeigt eine der Polscheiben 37 in Vorderansicht. Wie ersichtlich, weist die Polscheibe 37 einen lichten Querschnitt A auf, der im Bereich einer im Einbauzustand der Polscheiben vertikal angeordneten Achse 39 eine größere Ausdehnung b aufweist, als im Bereich einer zur vertikalen Achse 39 orthogonal angeordneten Achse 40. Das heißt, im oberen Bereich der vertikalen Symmetrieachse 39 ist ein breiterer Ringspalt 44 gegeben, als in einem Kreuzungsbereich der vertikalen Symmetrieachse 39 mit der orthogonalen Achse 40.

In den Figuren 5 und 6 ist in Vorderansicht bzw. in Seitenansicht eine weitere Ausführungsform eines Polelementes 37 dargestellt.
Wie ersichtlich, ist das Polelement 37 bei dieser Ausführungsform nicht als Ring ausgebildet, der einen ferromagnetischen Ringansatz des Rotorschaftes umschließt, sondern als ein Bauteil, das im Einbauzustand jeweils unterhalb eines der Ringansätze 38 des Rotorschaftes 4 angeordnet ist.

Auch eine solche Ausführungsform gewährleistet, dass der Rotorschaft 4 während des Spinnbetriebes sowohl bezüglich seiner axialen Position sicher auf der Stützscheibenlagerung 5 positioniert ist, als auch mit einer ausreichend hohen Anpresskraft F auf die Stützscheibenlagerung 5 gedrückt wird.

Die vorliegende Erfindung ist nicht auf die dargestellten Ausführungsbeispiele, insbesondere nicht auf die Anordnung des Einzelantriebes 26, beschränkt. Der Einzelantrieb 26 könnte beispielsweise nach einem nicht dargestellten Ausführungsbeispiel auch in einem Bereich direkt unterhalb der Stützscheibenpaare 7 angeordnet sein, ohne dass dadurch der eigentliche Erfindungsgedanke verlassen wird. Ferner kann der Rotorschaft 4 gemäß einem alternativen, nicht dargestellten Ausführungsbeispiel anstelle durch die beschriebene bevorzugte Ausgestaltung der Magnetlagereinrichtung 18 zum Bewirken einer Anpresskraft F in bekannter Weise durch nicht dargestellte mechanische Mittel wie bspw. eine Andrückrolle mit einer Anpresskraft F beaufschlagt werden.

## Patentansprüche

1. Offenend-Rotorspinnvorrichtung (1) mit einem Spinnrotor (3), der mit seinem Rotorschaft (4) im Zwickel einer Stützscheibenlagerung (5) gelagert und mittels einer Magnetlagereinrichtung (18) axial positioniert ist, wobei die Stützscheibenlagerung (5) aus zwei Stützscheibenpaaren (7) mit jeweils einer vorderen (7A) und einer hinteren (7B) Stützscheibe besteht, sowie einer Antriebs- und Lagereinrichtung (32) zur rotatorischen Beaufschlagung wenigstens eines der Stützscheibenpaare (7) der Stützscheibenlagerung (5),
**dadurch gekennzeichnet,**
**dass** die Magnetlagereinrichtung (18) zur axialen Fixierung des Rotorschaftes (4) im Bereich des Zwickels der Stützscheibenlagerung (5) zwischen den vorderen (7A) und den hinteren (7B) Stützscheiben angeordnet ist.

2. Offenend-Rotorspinnvorrichtung nach Anspruch 1, **dadurch gekennzeichnet, dass** die Magnetlagereinrichtung (18) zur axialen Fixierung des Rotorschaftes (4) so ausgebildet ist, dass der Rotorschaft (4) durch die Magnetlagereinrichtung (18) mit einer in Richtung der Stützscheiben (7A, 7B) wirkenden Anpresskraft (F) beaufschlagt ist.

3. Offenend-Rotorspinnvorrichtung nach Anspruch 1, **dadurch gekennzeichnet, dass** der Durchmesser (DS) der Stützscheiben (7A, 7B) der Stützscheibenpaare (7) weniger als das Doppelte des Durchmessers (D) des Spinnrotors (3) beträgt.

4. Offenend-Rotorspinnvorrichtung nach Anspruch 1, **dadurch gekennzeichnet, dass** die Stützscheibenpaare (7) über einen Tangentialriemen (6) an einen elektromotorischen Einzelantrieb (26) angeschlossen sind.

5. Offenend-Rotorspinnvorrichtung nach Anspruch 1, **dadurch gekennzeichnet, dass** wenigstens eines der Stützscheibenpaare (7) mit einem elektromotorischen Einzelantrieb (26) ausgestattet ist.

6. Offenend-Rotorspinnvorrichtung nach Anspruch 1, **dadurch gekennzeichnet, dass** die Stützscheibenpaare (7) jeweils auf einer Lagerwelle (29) angeordnet sind, die in einer Wälzlagereinrichtung (30) abgestützt ist, wobei die Wälzlagereinrichtungen (30) in paralleler Ausrichtung auf der dem Spinnrotor (3) gegenüberliegenden Seite der Stützscheibenpaare (7) angeordnet sind.

7. Offenend-Rotorspinnvorrichtung nach Anspruch 6, **dadurch gekennzeichnet, dass** die Lagerwellen (29) endseitig jeweils ein wirtelartiges Bauelement (31) aufweisen, das durch einen im Betriebszustand umlaufenden Tangentialriemen (6) beaufschlagt ist.

8. Offenend-Rotorspinnvorrichtung nach Anspruch 7, **dadurch gekennzeichnet, dass** die wirtelartigen Bauelemente (31) der Lagerwellen (29) über den Tangentialriemen (6) an einen Antriebswirtel (25) eines arbeitsstelleneigenen, elektromotorischen Einzelantriebes (26) angeschlossen sind.

9. Offenend-Rotorspinnvorrichtung nach Anspruch 8, **dadurch gekennzeichnet, dass** der elektromotorische Einzelantrieb (26) in einem Bereich unterhalb der Wälzlagereinrichtungen (30) für die Stützscheibenpaare (7) angeordnet ist.

10. Offenend-Rotorspinnvorrichtung nach Anspruch 2, **dadurch gekennzeichnet, dass** die Magnetlagereinrichtung (18) eine in einer Lagerbuchse (33) angeordnete, stationäre Magnetlagerkomponente (34) und eine mit dem Rotorschaft (4) des Spinnrotors (3) umlaufende Magnetlagerkomponente (35) aufweist, wobei die stationäre Magnetlagerkomponente (34) wenigstens ein Permanentmagnetelement (36) sowie Polelemente (37) umfasst und die umlaufende Magnetlagerkomponente (35) durch am Rotorschaft (4) des Spinnrotors (3) angeordnete, mit den Polelementen (37) magnetisch korrespondierende, ferromagnetische Ringansätze (38) gebildet wird.

11. Offenend-Rotorspinnvorrichtung nach Anspruch 10, **dadurch gekennzeichnet, dass** die Polelemente (37) als Polscheiben ausgebildet sind, die jeweils einen lichten Querschnitt (A) aufweisen, der im Bereich einer im Einbauzustand der Polscheiben (37) vertikal angeordneten Achse (39) eine größere Ausdehnung (b) aufweist, als im Bereich einer zur vertikalen Achse (39) orthogonal angeordneten Achse (40).

## Claims

1. Open-ended spinning device (1) with a spinning rotor (3) which is mounted with its rotor shaft (4) in the gusset of a support disc bearing (5) and axially positioned using a magnet bearing device (18) whereby the support disc bearing (5) consists of two pairs of support discs (7) each with a front (7A) and rear (7B) support disc as well as a drive and bearing device (32) for the rotary application of at least one of the pairs of support discs (7) of the support disc bearing (5),
**characterised in that**
the magnet bearing device (18) for axially attaching the rotor shaft (4) is arranged in the area of the winding of the support disc bearing (5) between the front (7A) and rear (7B) support discs.

2. Open-ended rotor spinning device according to claim 1, **characterised in that** the magnet bearing device (18) for axially attaching the rotor shaft (4) is designed in such a manner that the rotor shaft (4) acted on by the magnet bearing device (18) with a contact force (F) towards the support discs (7A, 7B).

3. Open-ended rotor spinning device according to claim 1, **characterised in that** the diameter (DS) of the support discs (7A, 7B) of the support disc pairs (7) is less than twice the diameter (D) of the spinning rotor (3).

4. Open-ended spinning device according to claim 1, **characterised in that** the support disc pairs (7) are connected to a single electric motor drive (26) via a tangential belt (6).

5. Open-ended rotor spinning device according to claim 1, **characterised in that** at least one of the support disc pairs (7) is fitted with a single electric motor drive (26).

6. Open-ended rotor spinning device according to claim 1, **characterised in that** the support disc pairs (7) are each arranged on a bearing shaft (29) which is supported in a roller bearing device (30) whereby the roller bearing devices (30) are arranged parallel on the side of the support disc pairs (7) which is opposite the spinning rotor (3).

7. Open-ended rotor spinning device according to claim 6, **characterised in that** the bearing shafts (29) each have a wharve-like component (31) which is acted on by a tangential belt (6) that revolves when in operation.

8. Open-ended rotor spinning device according to claim 7, **characterised in that** the wharve-like components (31) of the bearing shaft (29) are connected via the tangential belt (6) to a drive wharve (25) of a single electric motor drive (26) particular to each workstation.

9. Open-ended rotor spinning device according to claim 8, **characterised in that** the single electric motor drive (26) is located in an area under the roller bearing devices (30) for the support bearing pairs (7).

10. Open-ended rotor spinning device according to claim 2, **characterised in that** the magnet bearing device (18) has one stationary magnet bearing component (34) located in a bearing bushing (33) and one magnet bearing component (35) that revolves with the rotor shaft (4) of the spinning rotor (3) whereby the stationary magnet bearing component (34) has at least one permanent magnet element (36) as well as pole elements (37) and the revolving magnet bearing component (35) is composed of ferromagnetic annular attachments (38) located on the rotor shaft (4) of the spinning rotor (3) and corresponds magnetically to the pole elements (37).

11. Open-ended rotor spinning machine according to claim 10, **characterised in that** the pole elements (37) are formed as pole discs which each have a thin cross-section (A) which has a larger expansion (b) in the area of an axis (39) that is arranged vertically when the pole discs (37) are installed than in the area of an axis (40) arranged at right angles to the vertical axis (39).

## Revendications

1. Métier à filer à fibres libérées (1) avec un rotor de filature (3), placé, avec son arbre de rotor (4), dans l'interstice d'un palier à disques d'appui (5) et placé axialement au centre d'un dispositif à palier magnétique (18), sachant que le palier à disques d'appui (5) est composé deux paires de disques d'appui (7) composées d'un disque d'appui avant (7A) et d'un disque d'appui arrière (7B) ainsi que d'un dispositif d'entraînement et de roulement (32) pour la sollicitation en rotation d'au moins une des paires de disques d'appui (7) du palier à disques d'appui (5),
**caractérisé en ce que**,
le dispositif à palier magnétique (18) est agencé, pour la fixation axiale de l'arbre du rotor (4) dans la zone de l'interstice du palier à disques d'appui (5) entre les disques d'appui avant (7A) et arrière (7B).

2. Métier à filer à fibres libérées suivant la revendication 1, **caractérisé en ce que** le dispositif à palier magnétique (18) est formé, pour la fixation axiale de l'arbre du rotor (4) de manière à ce que l'arbre du rotor (4) soit sollicité, par le dispositif à palier magnétique (18), avec une force de compression (F) agissant vers les disques d'appui (7A, 7B).

3. Métier à filer à fibres libérées suivant la revendication 1, **caractérisé en ce que** le diamètre (DS) des disques d'appui (7A, 7B) des paires de disques d'appui (7) soit de moins du double du diamètre (D) du rotor de filature (3).

4. Métier à filer à fibres libérées suivant la revendication 1, **caractérisé en ce que** les paires de disques d'appui (7) sont accordés, par une courroie tangentielle (6), à un entraînement individuel à moteur électrique (26).

5. Métier à filer à fibres libérées suivant la revendication 1, **caractérisé en ce que** au moins une des paires de disques d'appui (7) est équipée d'un entraînement individuel à moteur électrique (26).

6. Métier à filer à fibres libérées suivant la revendication 1, **caractérisé en ce que** les paires de disques d'appui (7) sont agencées chacune sur un arbre de palier (29) soutenu dans un dispositif de roulement (30), sachant que les dispositifs de roulement (30) sont alignés à la parallèle des paires de disques d'appui (7) placées du côté opposé au rotor de filature (3).

7. Métier à filer à fibres libérées suivant la revendication 6, **caractérisé en ce que** les arbres de palier (29) présentent chacun, à leur extrémité, un composant verticillé (31) sollicité par une courroie tangentielle (6) tournant à l'état de fonctionnement.

8. Métier à filer à fibres libérées suivant la revendication 7, **caractérisé en ce que** les composants verticillés (31) des arbres de palier (29) sont raccordés par une courroie tangentielle (6), à un verticille d'entraînement (25) d'un entraînement individuel à moteur électrique (26) propre au poste de travail.

9. Métier à filer à fibres libérées suivant la revendication 8, **caractérisé en ce que** l'entraînement individuel à moteur électrique (26) est placé dans une zone sous les dispositifs de roulement (30) pour les paires de disques d'appui (7).

10. Métier à filer à fibres libérées suivant la revendication 2, **caractérisé en ce que** le dispositif à palier magnétique (18) présente un composant à palier magnétique (34) fixe, placé dans un coussinet (33), et un composant à palier magnétique (35) tournant avec l'arbre de rotor (4) du rotor de filature (3), sachant que le composant à palier magnétique fixe (34) comporte au moins un aimant permanent (36) ainsi que des éléments polaires (37) et que le composant à palier magnétique tournant (35) est formé d'une saillie annulaire (38) ferromagnétique, placée sur l'arbre de rotor (4) du rotor de filature (3), correspondant en termes de magnétisme avec les éléments polaires (37).

11. Métier à filer à fibres libérées suivant la revendication 10, **caractérisé en ce que** les éléments polaires (37) sont formés en tant que disques polaires présentant, chacun, une section libre (A) présentant, dans la zone d'un axe (39) agencé à la verticale des disques polaires (37), montés, une plus grande dilatation (b) que dans la zone d'un axe (40) placé à l'orthogonale de l'axe vertical (39).
